# EUROPÄISCHE PATENTANMELDUNG

(11) **EP 1 679 252 A1**
(43) Veröffentlichungstag der Anmeldung: **12.07.2006**
(21) Anmeldenummer: 05100064.4
(22) Anmeldetag: 06.01.2005
(51) Int. Cl.: B62D 27/06

(54) **Karosserieverbindungsanordnung**

(71) Anmelder: Ford Global Technologies, LLC, A subsidary of Ford Motor Company, Dearborn, MI 48126 (US)
(72) Erfinder: Klingbeil, Hans, 51063, Köln (DE)
(74) Vertreter: Dörfler, Thomas

(57) **Zusammenfassung**

Die Erfindung betrifft eine Karosserieverbindungsanordnung (1), insbesondere für ein Kraftfahrzeug, mit einem Längsträger (3) und mit einem Querträger (2), die mit einander verbunden sind und an einander im Bereich der Verbindung anliegen. Um diese mit einer hohen Festigkeit trotz einfacher und kostengünstiger Herstellung sowie niedrigem Gewicht und hoher Steifigkeit auszuführen, überlappen die Träger (2, 3) im Bereich der Verbindung einander und eine Befestigung (5, 16) für ein Fahrzeugteil (14) ist im überlappenden Bereich der Verbindung angeordnet und durchgreift dabei derart einen der beiden Träger (3) und liegt an dem anderen Träger (2) zumindest an, dass die Festigkeit des Bereichs der Verbindung durch die vorgenommene Befestigung des Fahrzeugteils (14) erhöht wird.

## Beschreibung

Die Erfindung betrifft eine Karosserieverbindungsanordnung mit einem Längsträger und mit einem Querträger, die mit einander verbunden sind und an einander im Bereich der Verbindung anliegen.

Karosserieverbindungsanordnungen der vorstehenden Art sind bei Kraftfahrzeugen, insbesondere Personenkraftfahrzeugen (PKW) üblich und daher bekannt. Sie umfassen meist seitlich angeordnete und in Längsrichtung des Fahrzeugs verlaufende Längsträger, die über etwa quer dazu verlaufende Querträger verbunden sind. Diese sind üblicherweise an den Verbindungsstellen, wo die Träger aneinander angrenzen, miteinander verschweißt.

Aus der DE 195 22 219 A1 ist ein Kraftfahrzeug-Hinterrahmen bekannt, bei dem zwei Längsträger durch einen Hinterachs-Querträger miteinander verbunden sind. Hierzu ist an jedem Ende des Querträgers ein seine jeweilige Stirnseite teilweise verschließendes Winkelstück eingeschweißt, das wiederum mit der Außenseite des Längsträgers verschweißt ist. Ein Verstärkungsblech ist unterhalb des Verbindungsspalts gegen die Unterseiten der Träger geschweißt.

Die DE 195 07 767 C2 offenbart einen Fahrzeugchassis-Unterrahmen-Montageaufbau, bei dem zwischen seitlichen Längsträgern ein Querträger angeordnet ist, wobei ein zusätzlicher Träger an den Verbindungsabschnitten zwischen Längsträgern und Querträger festgelegt ist. Der Querträger und der jeweilige Längsträger grenzen dabei an einander ohne Überlappung an. Durch den zusätzlichen Träger und den Querträger ist ein Mutterelement zur Befestigung eines Unterrahmens für weitere Bauteile angeordnet.

Ein Querträger als Teil einer Kraftfahrzeug-Bodengruppe ist aus der DE 100 22 916 A1 bekannt. Dieser weist beidseitig im Verbindungsbereich je einen Befestigungsbereich zum Anschrauben einer Hinterachseinheit und einen benachbarten Federaufnahmebereich zur Fixierung einer Schraubenfeder auf. Zusätzlich ist eine Versteifungsstruktur im Verbindungsbereich vorgesehen, die von kastenförmigen ineinander verschachtelten Stahlblechen gebildet wird.

Insbesondere ist die Festigkeit von Karosserieverbindungsanordnungen im Bereich der Sitz- und/oder Sicherheitsgurtbefestigungen im Bodenbereich von Bedeutung, da diese im Crashfall sehr hohen Belastungen ausgesetzt sind. Oft sind die Sitz- und/oder Sicherheitsgurtbefestigungen am Fahrzeugboden verschraubt, der mit zusätzlichen Blechen verstärkt ist. Die Verstärkungsbleche können wiederum an dem hinteren Achsquerträger Punktverschweißt sein, so dass die auftretenden Kräfte über den Achsquerträger auf die Längsträger verteilt werden können. Hierbei wird die Verbindungsstelle bzw. Verbindungsanordnung des Querträgers mit dem jeweiligen Längsträger stark belastet. Trotz der Verstärkungsbleche kann es so unter den ECE 14 und ECE 17 Testbedingungen zu einem Ausreißen der Schweißpunkte zwischen dem Querträger und dem Längsträger kommen.

Bei Karosserien und daher auch bei ihren Verbindungsanordnungen besteht somit der Wunsch, diese mit einer hohen Festigkeit der Verbindungsstellen oder Verbindungsanordnungen auszuführen trotz einfacher und kostengünstiger Herstellung sowie niedrigem Gewicht und hoher Steifheit.

Diese Aufgabe wird durch die in Anspruch 1 und 15 angegebene Erfindung gelöst.

Dadurch, dass die Träger im Bereich der Verbindung einander überlappen und eine Befestigung für ein Fahrzeugteil im überlappenden Bereich der Verbindung angeordnet ist und dabei derart einen der beiden Träger durchgreift und an dem anderen Träger zumindest anliegt, dass die Festigkeit des Bereichs der Verbindung durch die vorgenommene Befestigung des Fahrzeugteils erhöht wird, ist es möglich die Verbindungsanordnung bei einfacher und kostengünstiger Herstellung sowie niedrigem Gewicht und hoher Steifigkeit zu verfestigen. Die üblicherweise ohnehin vorhandene Befestigung für ein Fahrzeugteil wird also in den überlappenden Bereich der Verbindung der Träger verlagert. Dies wird ohne zusätzliche Verstärkungsbleche oder verstärkten Bauteilen erreicht.

Als Längsträger sind in Längsrichtung des Fahrzeugs ausgerichtete Träger zu verstehen, insbesondere solche der Bodengruppe der Karosserie. Der Querträger ist entsprechend ein in einem Winkel von etwa 90°dazu, also etwa quer dazu, ausgerichteter Träger, wie z. B ein Achsquerträger. Der Winkel im Bereich der Verbindung zwischen den Trägern kann in einer Größenordnung von etwa 60 bis 120° liegen, je nach Ausführung der Träger im Einzelnen. So ist es bekannt, dass Querträger lediglich im Bereich der Verbindung mit dem Längsträger zunächst einen vom 90° abweichenden Winkel ausbilden, die Gesamtausrichtung der Träger zueinander jedoch trotzdem etwa quer bzw. rechtwinklig zueinander ist.

In einer Ausführungsform der Erfindung überlappt der Querträger den Längsträger. Insbesondere ist es günstig, wenn der Querträger den Längsträger umgreift also quasi um den Längsträger "gewickelt" ist, so dass eine besonders feste und zugleich steife Verbindungsanordnung erreicht wird.

Als Querträger kommen übliche Querträger in Betracht. Vorteilhafterweise ist der Querträger ein Sitzquerträger, ein hinterer Sitzquerträger, ein Achsquerträger, ein Hinterachsquerträger oder ein Hilfsrahmen des Fahrwerks oder der Fahrwerksaufhängung oder eines Querträgers. So wie dies z. B. bei dem Hilfsrahmen eines Achsquerträgers oder Fahrwerks der Fall ist. Diese bieten sich besonders an, da sie üblicherweise besonders stabil ausgeführt sind.

Am Querträger sind in einer weiteren Ausführungsform Sitz- und/oder Sicherheitsgurtbefestigungen angeordnet. So kann die im Crashfall eingeleitete Kraft ohne Unterbrechung über den Querträger an die Längsträger und an das weitere Fahrzeugteil weiter gegeben bzw. verteilt werden, das im überlappenden Bereich der Verbindung befestigt ist. Somit besteht unter den ECE 14 und ECE 17 Testbedingungen keine Gefahr des Ausreißens (vgl. oben).

Es bietet sich an, dass das Fahrzeugteil ein Teil des Fahrwerks ist, so dass diese konstruktiv stabilen Fahrzeugteile einen Teil der eingeleiteten Kräfte aufnehmen. Auch wird so die Verlagerung der Karosserieteile unter den ECE 14 und ECE 17 Testbedingungen verringert.

Vorzugsweise durchgreift die Befestigung den Längsträger und liegt an dem Querträger an oder die Befestigung durchgreift sowohl den Längsträger als auch den Querträger. Auch diese Anordnungen erhöhen die Festigkeit der Verbindungsanordnung weiter und erlauben eine einfache Festlegung der Befestigung.

In einer Ausführungsform der Karosserieverbindungsanordnung ist die Befestigung eine Hülse, die vorzugsweise in dem oberen der beiden Träger (meist der Längsträger) festgelegt ist. Auch kann sich die Hülse zumindest an dem unteren Träger abstützen. Sinnvoll ist es, wenn die Hülse eine Gewindehülse ist, so dass z. B. das Fahrwerksteil durch Verschrauben befestigt werden kann.

In einer bevorzugten Ausführungsform ist das Fahrwerksteil ein Teil der Fahrwerksaufhängung und mittels der Befestigung mit dem Querträger und Längsträger verschraubbar.

Weitere Merkmale, Einzelheiten und Vorteile der Erfindung ergeben sich aus den Unteransprüchen und der nachfolgenden Beschreibung eines Ausführungsbeispieles anhand der Zeichnung. Es zeigen:
- Fig. 1: eine perspektivische Ansicht auf eine Verbindungsanordnung im Bereich einer Verbindung eines Querträgers mit einem Längsträger von oben;
- Fig. 2: eine perspektivische Ansicht auf die Verbindungsanordnung aus Fig. 1 von unten;
- Fig. 3: einen Schnitt durch die Verbindungsanordnung der Fig. 1 entlang der Längsrichtung des Querträgers mit verschraubter Achsaufhängung und

- Fig.4: einen Schnitt durch die Verbindungsanordnung der Fig. 3 entlang der Längsrichtung des Längsträgers.

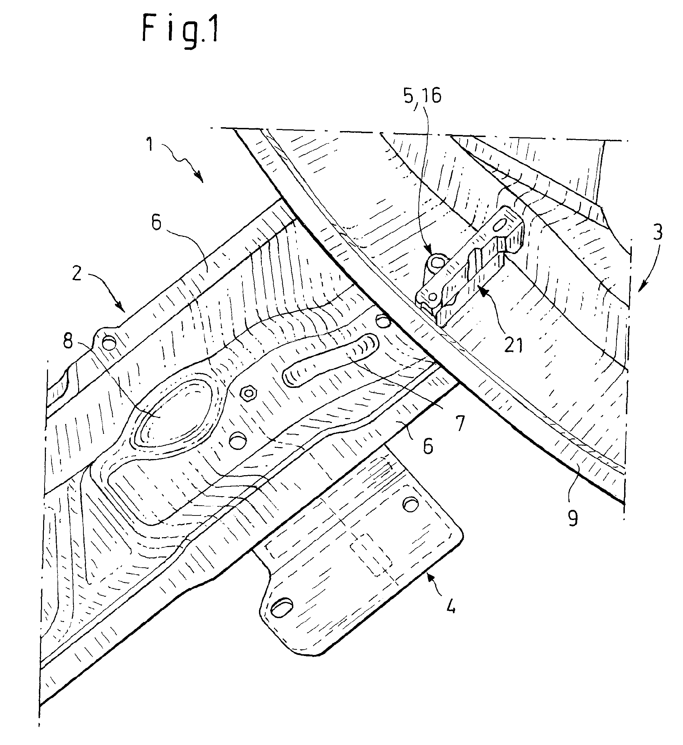

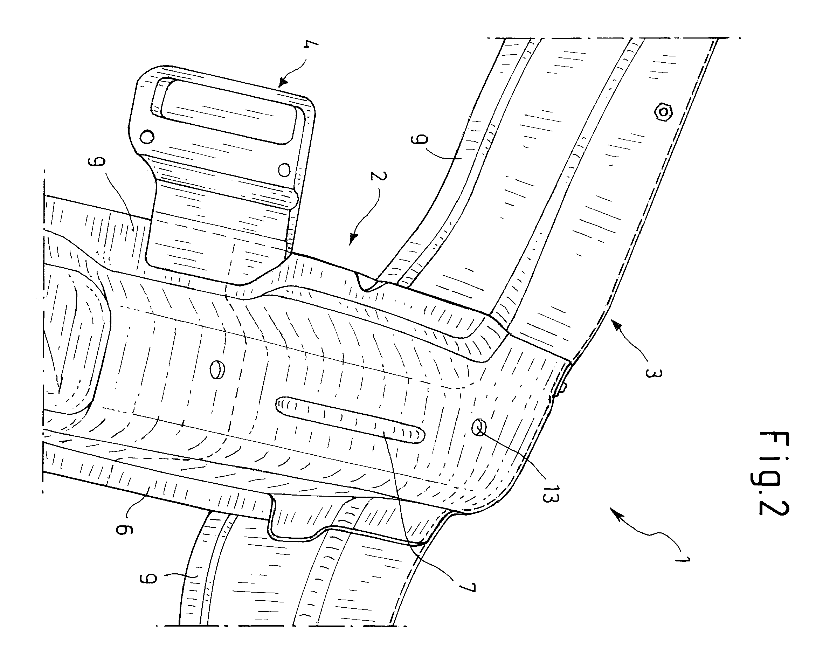

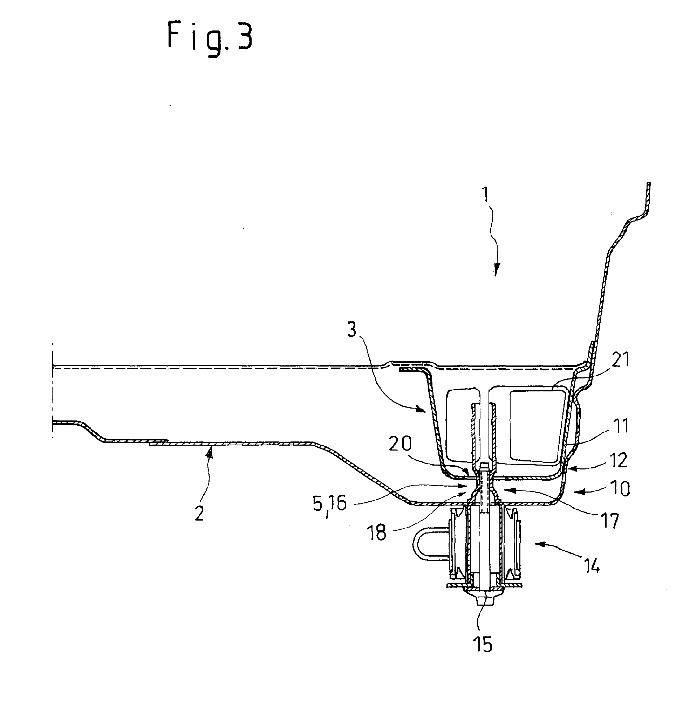

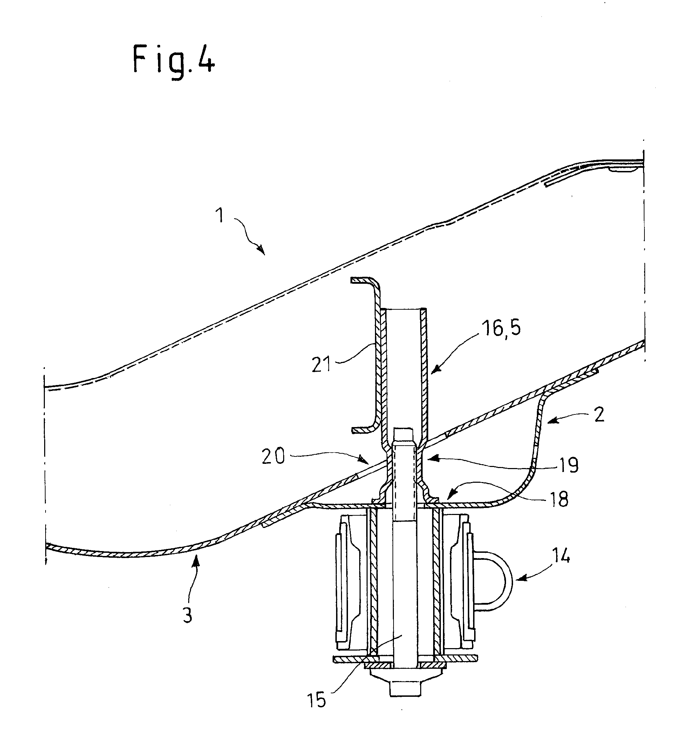

In den Figuren 1 und 2 ist eine jeweils perspektivische Ansicht auf eine als Ganzes mit 1 bezeichnete Verbindungsanordnung einer Personenkraftwagenkarosserie im Bereich einer Verbindung eines Querträgers 2 mit einem Längsträger 3 von oben bzw. von unten gezeigt. Figuren 3 und 4 zeigen Schnitte durch den Bereich der Verbindung mit verschraubter Achsaufhängung. Es versteht sich, dass, obwohl nur eine Seite des Querträgers 2 dargestellt ist und beschrieben werden wird, die andere Seite des Querträgers 2 entsprechend aufgebaut ist und der Querträger 2 zwei seitlich angeordnete Längsträger 3 miteinander verbindet.

Die Bezeichnungen oben bzw. unten beziehen sich auf die Ausrichtung bezüglich der Fahrzeughochachse bei üblicher Ausrichtung des Fahrzeugs, also z. B. im Stand.

Der Querträger 2 ist im vorliegenden Fall ein Hinterachsquerträger, der aus einem etwa U-förmigen nach oben offenen Blech aufgebaut ist. Der Querträger 2 umfasst entlang der Längsseiten jeweils einen umgebogenen Rand 6. Der Querträger 2 weist weiterhin Sicken 7 und Ein- bzw. Ausbuchtungen 8 zur Erhöhung der Steifheit und Festigkeit und/oder zur Anpassung an weitere nicht gezeigte Fahrzeugteile auf. An einem der Ränder 6 ist ein Sitz- und/oder Sicherheitsgurtbefestigungsblech 4 angeschweißt, an dem etwaige Sitz- und/oder Sicherheitsgurtbefestigungen durch ein Bodenblech hindurch vorgenommen werden können.

Der Längsträger 3 ist etwa in Längsrichtung des Fahrzeugs ausgerichtet und besitzt ebenfalls einen etwa U-förmigen Querschnitt sowie entlang der Längsseiten jeweils einen umgebogenen Rand 9. Der Längsträger 3 kann ebenfalls Sicken und Ein- bzw. Ausbuchtungen zur Erhöhung der Steifheit und Festigkeit und/oder zur Anpassung an weitere nicht gezeigte Fahrzeugteile aufweisen.

An der Stirnseite überlappt der Querträger 2 den Längsträger 3, d. h. liegt in Figur 1 (von oben besehen) mit seinen Rändern 6 von unten an diesem an. Der Querträger und der Längsträger überlappen sich also im Bereich der ihrer Verbindung. Der Querträger 2 ist dabei mit dem Längsträger 3 in üblicher Weise über Schweißpunkte verbunden.

Wie aus Figur 2 und insbesondere Figur 3 ersichtlich ist, umgreift der Querträger 2 an seiner Stirnseite 10 den Längsträger 3, liegt also an dessen Außenseite 11 mit einem umgebogenen Bereich 12 an. Dazu springt der Querträger 2 im Bereich der Verbindung mit dem Längsträger 3 zurück bzw. nach unten, so dass die Oberkanten der Ränder 6, 9 der beiden Träger 2, 3 etwa eine gemeinsame Ebene für ein Bodenblech ausbilden.

Die Verbindungsanordnung 1 umfasst ferner eine Befestigung 5 für ein Fahrzeugteil, die im überlappenden Bereich der Verbindung angeordnet ist. Im vorliegenden Fall ist das Fahrzeugteil ein Hilfsrahmen 14 der hinteren Achsaufhängung, die zur besseren Übersicht nicht dargestellt ist. Die Befestigung 5 ist als Gewindehülse 16 ausgebildet, mit der der Hilfsrahmen 14 mittels einer entsprechenden Gewindeschraube 15 verschraubt wird. Dazu weist der unten liegende Querträger 2 eine entsprechende Bohrung 13 auf, wie insbesondere aus Fig. 3 und 4 hervorgeht.

Die Gewindehülse 16 ist am unteren Ende 17 verbreitert, so dass sie sich an der unteren Innenseite 18 des Querträgers 2 um den Umfang der Bohrung 13 abstützt und dort ggf. verschweißt werden kann. Oberhalb dessen weist die Gewindehülse 16 einen Gewindebereich 19 zur Aufnahme der Gewindeschraube 15 auf.

Von der Innenseite 18 des Querträgers 2 erstreckt sich die Gewindehülse 16 nach oben und durchgreift eine in der Unterseite des Längsträgers 3 vorgesehene Ausnehmung 20. Oberhalb derer und innerhalb des Längsträgers 3 ist die Gewindehülse 16 an einem zwischen den Seitenwänden des Längsträgers 3 angeordneten Blech 21 festgelegt. Dies kann z. B. durch Schweißen erfolgen.

Durch die zusätzliche Verbindung der beiden Träger 2, 3 über die Befestigung 5 wird also die Verbindungsanordnung 1 verstärkt.

Somit können die von den Sitz- und/oder Sicherheitsgurtbefestigungen stammenden Kräfte über die Befestigungsbleche 4 an den Querträger 2 und von dort an den Längsträger 3 und über die Befestigung 5 bzw. Gewindehülse 16 auch an den Hilfsrahmen 14 der Achsaufhängung weitergeben werden.

### BEZUGSZEICHENLISTE:

- 1: Verbindungsanordnung
- 2: Querträger
- 3: Längsträger
- 4: Sitz- und/oder Sicherheitsgurtbefestigungsblech
- 5: Befestigung
- 6: Rand
- 7: Sicke
- 8: Ein- bzw. Ausbuchtung
- 9: Rand
- 10: Stirnseite des Querträgers
- 11: Außenseite
- 12: umgebogener Bereich
- 13: Bohrung
- 14: Hilfsrahmen
- 15: Gewindeschraube
- 16: Gewindehülse
- 17: unteres Ende der Gewindehülse
- 18: untere Innenseite des Querträgers
- 19: Gewindebereich der Gewindehülse
- 20: Ausnehmung
- 21: Blech

## Patentansprüche

1. Karosserieverbindungsanordnung (1), insbesondere für ein Kraftfahrzeug, mit einem Längsträger (3) und mit einem Querträger (2), die mit einander verbunden sind und an einander im Bereich der Verbindung anliegen,
**dadurch gekennzeichnet, daß**
die Träger (2, 3) im Bereich der Verbindung einander überlappen und eine Befestigung (5, 16) für ein Fahrzeugteil (14) im überlappenden Bereich der Verbindung angeordnet ist und dabei derart einen der beiden Träger (3) durchgreift und an dem anderen Träger (2) zumindest anliegt, dass die Festigkeit des Bereichs der Verbindung durch die vorgenommene Befestigung des Fahrzeugteils (14) erhöht wird.

2. Karosserieverbindungsanordnung nach Anspruch 1,
**dadurch gekennzeichnet, daß**
die Befestigung (5, 16) den Längsträger (3) durchgreift und an dem Querträger (2) anliegt.

3. Karosserieverbindungsanordnung nach Anspruch 1,
**dadurch gekennzeichnet, daß**
die Befestigung (5, 16) sowohl den Längsträger (3) als auch den Querträger (2) durchgreift.

4. Karosserieverbindungsanordnung nach einem der Ansprüche 1 bis 3,
**dadurch gekennzeichnet, dass**
das Fahrzeugteil ein Teil des Fahrwerks (14) ist.

5. Karosserieverbindungsanordnung nach einem der Ansprüche 1 bis 4,
**dadurch gekennzeichnet, dass**
der Querträger (2) ein Sitzquerträger, ein hinterer Sitzquerträger, ein Achsquerträger, ein Hinterachsquerträger, ein Hilfsrahmen (14) des Fahrwerks oder der Fahrwerksaufhängung oder eines Querträgers ist.

6. Karosserieverbindungsanordnung nach einem der Ansprüche 1 bis 5,
**dadurch gekennzeichnet, dass**
am Querträger (2) Sitz- und/oder Sicherheitsgurtbefestigungen (4) angeordnet sind.

7. Karosserieverbindungsanordnung nach einem der Ansprüche 1 bis 6,
**dadurch gekennzeichnet, dass**
der Querträger (2) den Längsträger (3) überlappt.

8. Karosserieverbindungsanordnung nach einem der Ansprüche 1 bis 7,
**dadurch gekennzeichnet, dass**
der Querträger (2) den Längsträger (3) umgreift.

9. Karosserieverbindungsanordnung nach einem der Ansprüche 1 bis 8,
**dadurch gekennzeichnet, dass**
die Befestigung (5) eine Hülse (16) ist.

10. Karosserieverbindungsanordnung nach Anspruch 9,
**dadurch gekennzeichnet, dass**
die Hülse (16) in dem oberen der beiden Träger, insbesondere Längsträger (3), festgelegt ist.

11. Karosserieverbindungsanordnung nach Anspruch 9 oder 10,
**dadurch gekennzeichnet, dass**
die Hülse (16) sich zumindest an dem unteren Träger (2) abstützt.

12. Karosserieverbindungsanordnung nach einem der Ansprüche 9 bis 11,
**dadurch gekennzeichnet, dass**
die Hülse eine Gewindehülse (16) ist.

13. Karosserieverbindungsanordnung nach einem der Ansprüche 1 bis 12,
**dadurch gekennzeichnet, dass**
die Befestigung (5, 16) über ein Blech (21) in dem oberen Träger (3) festgelegt ist.

14. Karosserieverbindungsanordnung nach einem der Ansprüche 1 bis 13,
**dadurch gekennzeichnet, dass**
das Fahrwerksteil ein Teil der Fahrwerksaufhängung (14) ist und mittels der Befestigung (5, 16) mit dem Querträger (2) und Längsträger (3) verschraubbar ist.

15. Verfahren zur Erhöhung der Festigkeit einer Karosserieverbindungsanordnung (1), insbesondere nach einem der vorhergehenden Ansprüche, eines Querträgers (2) und eines Längsträgers (3), die mit einander verbunden sind und an einander im Bereich der Verbindung anliegen,
**dadurch gekennzeichnet, dass**
die Träger (2, 3) im Bereich der Verbindung einander überlappend angeordnet werden und eine Befestigung (5, 16) für ein Fahrzeugteil (14) im überlappenden Bereich der Verbindung angeordnet wird und dabei derart einen der beiden Träger (3) durchgreift und an dem anderen Träger (2) zumindest anliegt, dass die Festigkeit des Bereichs der Verbindung durch die vorgenommene Befestigung des Fahrzeugteils (14) erhöht wird.
